# EUROPÄISCHE PATENTSCHRIFT

(11) **EP 0 895 168 B1**
(45) Veröffentlichungstag und Bekanntmachung des Hinweises auf die Patenterteilung: **07.03.2007**
(21) Anmeldenummer: 98202508.2
(22) Anmeldetag: 27.07.1998
(51) Int. Cl.: G06F 13/42, G06F 13/28

(54) **Kommunikationssystem mit einer seriellen Schnittstelle**
Communication system with a serial interface
Système de communication avec une interface sérielle

(30) Priorität: 02.08.1997 DE 19733526
(43) Veröffentlichungstag der Anmeldung: 03.02.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Salbaum, Helmut, Dipl.-Ing., Röntgenstrasse 24, 22335 Hamburg (DE); Mehling, Rainer, Dipl.-Ing., Röntgenstrasse 24, 22335 Hamburg (DE)
(74) Vertreter: Pennings, Johannes

(56) Entgegenhaltungen:
- WO-A-97/00480
- US-A- 5 481 678

## Beschreibung

Die Erfindung betrifft ein Kommunikationssystem mit wenigstens einer Schnittstelle zum Datenaustausch, die über wenigstens einen internen Bus mit einem Mikroprozessor und einer DMA-Einheit gekoppelt ist, und die zur Steuerung des Datenaustausches jeweils zu quittierende Steuersignale entweder an einen Mikroprozessor oder eine DMA-Einheit überträgt.

Des weiteren betrifft die Erfindung auch eine Schnittstelle für ein solches Kommunikationssystem.

Aus EP 0 422 776 ist ein Kommunikationssystem für seriellen Datenaustausch bekannt, das aus einem Mikroprozessor, einem Speicher, einer DMA-Einheit (Direct Memory Access Control Unit, DMAC) und einer seriellen Schnittstelle (Serial Communication Control, SCC) besteht. Diese Funktionsblöcke sind gemäß Figur 3 über einen Datenbus miteinander verbunden (Spalte 4, Zeile 6-26). In der Figur 3 mit zugehöriger Beschreibung (Spalte 8, Zeile 41 bis Spalte 9, Zeile 12) wird beschrieben, wie die Daten (Communication Line 318) von der Schnittstelle (SCC) empfangen werden. Danach werden unter Kontrolle der DMAC die Adressinformation und der Nachrichteninhalt der Datenpakete über den Datenbus (310) an einen festgelegten Speicherplatz im Speicher eingeschrieben. In dieser Phase liefert die Schnittstelle (SCC) keine Steuersignale an den Mikroprozessor. Die DMA-Einheit (DMAC) steuert die Übertragung der Datenpakete von der Schnittstelle (SCC) in den Speicher, ohne eine Kontrolle des Vorgangs und damit eine Möglichkeit auf Abweichungen vom normalen Vorgang zu reagieren (Spalte 8, Zeile 41-47).

Das bedeutet, dass der Datenaustausch immer im DMA-Modus stattfindet, in dem die DMA-Einheit die Übertragung in den Speicher steuert. Da das angegebene Kommunikationssystem keine Steuerleitung von der Schnittstelle zum Mikroprozessor aufweist, kann die serielle Schnittstelle nicht im herkömmlichen Interrupt-Modus betrieben werden. In einem Interrupt-Mode meldet die Schnittstelle durch ein Steuersignal (Interrupt) jede Zustandsänderung (z.B. Empfangs-bereitschaft, Daten empfangen, Daten gesendet, Adressierung/Initialisierung einer Übertragung auf den Bus, usw.) während des Datenaustausches an den Mikroprozessor. Diese herkömmliche Art der Steuerung des Datenaustausches bedingt jedoch eine sehr starke Belastung des Mikroprozessors und des Datenbuses, der dadurch wesentlich weniger Kapazitäten für andere Aufgaben (z.B. die Steuerung weiterer Schnittstellen) zur Verfügung stellen kann. Insbesondere bei hohen Taktraten auf dem Datenbus (z.B. 400 kBit IIC-Bus) oder großen zu übertragenden Datenmengen (z.B. zu einem graphischen Display) ist der Mikroprozessor fast ausschließlich mit der Verarbeitung der Interrupt-Anforderungen der Schnittstelle beschäftigt.

Aus US 5,481,678 ist ein Datenprozessor bekannt, welcher eine "interrupt control unit 102", eine DMA Steuereinheit 103 und eine Auswahleinheit 104 zur Auswahl einer Verbindung von Beendigungs- und Fehlersignalen von einer Steuereinheit für die serielle Kommunikation sowie externen Interrupt- und DMA-Anforderungssignalen mit Interupt-Inputs mit der Interrupt- und DMA-Steuereinheit umfasst. Weiterhin umfasst der Datenprozessor ein Auswahlregister, mit welchem ein Auswahlmodus für die Auswahleinheit eingestellt werden kann. Dadurch wird ermöglicht, dass mittels Programmierung sowohl zwischen einem Betrieb mittels Interrupt und einem Betrieb mittels DMA-Übertragung unterschieden werden kann, als auch eine effiziente Nutzung der Hardware des Datenprozessors erreicht wird.

Die Aufgabe der Erfindung ist es daher, ein Kommunikationssystem zu schaffen, das einen effizienten Datenaustausch über eine Schnittstelle bei geringer Belastung des Mikroprozessors ermöglicht.

Die Aufgabe wird erfindungsgemäß dadurch gelöst, dass die Schnittstelle zur Übertragung einer ersten Gruppe von Steuersignalen über eine erste Steuerleitung an die DMA-Einheit und einer zweiten Gruppe von Steuersignalen über eine zweite Steuerleitung an den Mikroprozessor vorgesehen ist, wobei die Schnittstelle über die erste und die zweite Steuerleitung ständig mit der DMA-Einheit und dem Mikroprozessor verbunden ist. Durch die zweite Steuerleitung ist die Schnittstelle ständig sowohl mit dem Mikroprozessor als auch mit der DMA-Einheit verbunden. Daher wird der Datenaustausch über diese Schnittstelle nicht nur vom Mikroprozessor (Interrupt-Modus) oder nur von der DMA-Einheit (DMA-Modus) gesteuert. Durch entsprechende Einstellungen an der Schnittstelle kann ein auswählbarer Teil des Steuerungsaufwandes vom Mikroprozessor an die DMA-Einheit abgegeben werden. Besonders vorteilhaft ist es, die Gruppe von Steuersignalen von der DMA-Einheit bearbeiten zu lassen, die nicht unmittelbar einer Nachbearbeitung oder einer Fallunterscheidung bedürfen, und die besonders häufig während eines Datenaustausches auftreten. Die Gesamtanzahl und Art der Steuersignale (Interrupts), die jeweils einem bestimmten Zustand der Schnittstelle entsprechen, können beibehalten werden.

Vorteilhafte Ausführungsformen sind in den übrigen Ansprüchen angegeben. Dabei wird die Schnittstelle durch eine serielle I²C-Bus-Schnittstelle (Inter-Integrated-Circuit-Bus) zum Datenaustausch mit einem I²C-Bus gebildet, für die sich die Erfindung besonders eignet. Eine Schnittstelle für einen I²C-Bus (s. Philips Semiconductors User Manual 90CL301, S. 103-138) wird nach dem Stand der Technik immer im Interrupt-Modus betrieben, d.h., die Schnittstelle überträgt Steuersignale immer an den Mikroprozessor. Da jede Zustandsänderung bei einem Datenaustausch einen Interrupt (z.B. Datenbyte gesendet oder empfangen) generiert, ist der Mikroprozessor insbesondere bei großen Datenmengen (z.B. zu einem graphischen Display) mit der Verarbeitung der Interrupt-Anforderungen der Schnittstelle beschäftigt. Für eine möglichst große Entlastung des Mikroprozessors ist es vorteilhaft, die Steuersignale zur Bearbeitung an die DMA-Einheit zu übertragen, die nicht unmittelbar einer Nachbearbeitung oder Fallunterscheidung bedürfen, da hier keine sofortige Mikroprozessoraktivität notwendig ist. Es werden die Steuersignale der ersten Gruppe, die über eine erste Steuerleitung an die DMA-Einheit übertragen wird, zugeordnet, die bei einem Datenaustausch am häufigsten auftreten. Dies sind die Zustände der Schnittstelle, die das eigentliche Senden und das Empfangen von Daten betreffen, nachdem der Datenaustausch initialisiert wurde (beispielsweise Byte gesendet, Byte empfangen, Daten über den internen Bus des Kommunikationssystems übertragen und Bestätigungssignale für Anforderungen von der DMA-Einheit). Dagegen wird die zweite Gruppe von Steuersignalen über eine zweite Steuerleitung an den Mikroprozessor übertragen, der die Verarbeitung übernimmt. Dazu gehören insbesondere die Interrupts für die Zustände, in denen die Schnittstelle eine Übertragung auf den internen Bus initialisiert, den Empfänger der über den I²C-Bus empfangenen Daten adressiert, das Ende eines Datenaustausches signalisiert sowie Bestätigungssignale für Anforderungen des Mikroprozessors.

Dadurch ergibt sich der Vorteil, daß auch große Datenmengen schnell übertragen werden können. Da der Datenaustausch weitgehend von der DMA-Einheit gesteuert wird, treten keine zeitlichen Lücken auf, die z.B. durch Blockierung der Interrupts der Schnittstelle durch einen höher priorisierten Interrupt entstehen können. Außerdem wird auf diese Weise bei dem erfindungsgemäßen Kommunikationssystem eine optimale Ausnutzung des Mikroprozessors und des Buses erreicht.

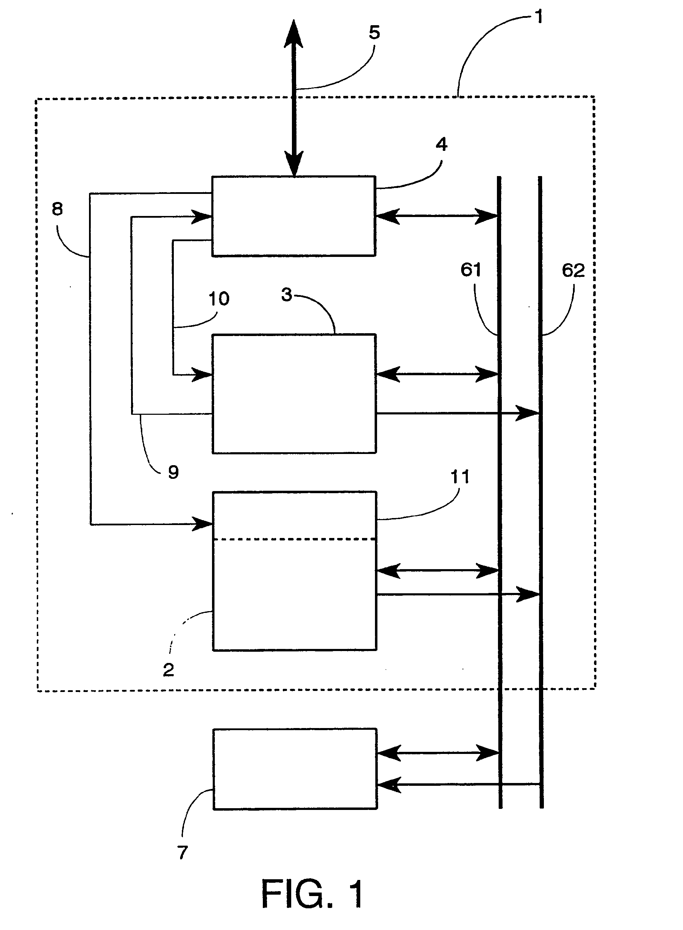

Ein Ausführungsbeispiel soll im folgenden anhand einer Figur näher erläutert werden. Dabei zeigt die Figur 1 ein Blockschaltbild eines erfindungsgemäßen Kommunikationssystems.

Das in der Figur 1 dargestellte Kommunikationssystem 1 besteht aus einem Mikroprozessor (CPU) 2, einer DMA-Einheit 3 und einer I²C-Schnittstelle 4, die durch einen internen Bus aus Adressbus 62 und Datenbus 61 miteinander verbunden sind. Im Mikroprozessor (CPU) 2 ist eine Auswerteeinheit (Interrupt Control Unit, ICU) 11 integriert, die über eine Steuerleitung 8 mit der I²C-Schnittstelle 4 verbunden ist. Weiterhin ist noch die DMA-Einheit 3 mit der I²C-Schnittstelle 4 über Steuerleitungen 9 und 10 gekoppelt. Außerdem ist ein adressierbarer Speicher (RAM) 7 an den internen Bus angeschlossen. Die Schnittstelle stellt die Verbindung zwischen dem Kommunikationssystem 1 und einem I²C-Bus 5 her.

Über die I²C-Bus-Schnittstelle 4 und dem I²C-Bus 5 werden Daten von und zu elektronischen Baugruppen (IC's) mit einer I²C-Bus-Schnittstelle mit Unterstüzung der CPU 2 und der DMA-Einheit 3 übertragen. Dazu meldet die Schnittstelle 4 per Steuersignal (Interrupt) über die Steuerleitung 8, wenn von einer anderen Baugruppe an die Schnittstelle 4 gesendete Daten empfangen werden. Die ICU 11 liefert für jede Steuerleitung einen Interrupt-Vektor, der an den Kern der CPU 2 übertragen wird. Die CPU 2 wertet den Interrupt-Vektor aus und startet anhand der im Interrupt-Vektor enthaltenen Startadresse eine entsprechende Interrupt-Routine. Dadurch wird der Datenaustausch initialisiert und ein Speicherbereich im RAM 7 adressiert, in dem die empfangenen Daten abgespeichert werden. Bei großen Datenmengen, wie beispielsweise für ein graphisches Display, überträgt die Schnittstelle 4 nach der Initialisierung ein Steuersignal über die Steuerleitung 10 an die DMA-Einheit 3, das einer Anforderung für einen DMA-Transfer entspricht. Der DMA-Transfer ermöglicht eine schnelle Übertragung eines empfangenen Bytes über den Datenbus 61 an das RAM 7, ohne die CPU 2 zu belasten. Nach der Übertragung des Bytes überträgt die DMA-Einheit 3 über die Steuerleitung 9 ein Steuersignal an die Schnittstelle 4, mit dem die Übertragung bestätigt und die DMA-Transfer-Anforderung gelöscht wird. Dieser Ablauf wiederholt sich mit dem nächsten von der Schnittstelle 4 vom I²C-Bus empfangenen Byte. Beim Senden von Bytes durch die Schnittstelle 4 auf den I²C-Bus erfolgt die Übertragung der im RAM 7 zwischengespeicherten Bytes über den Datenbus 61 entsprechend.

Auf diese Weise wird die Belastung der CPU 2 stark reduziert, da sie nicht mehr auf jedes Steuersignal (Interrupt) von der I²C-Schnittstelle 4 reagieren muß, sondern die am häufigsten auftretenden Steuersignale von der Schnittstelle 4 an die DMA-Einheit 3 gesendet und dort bearbeitet werden. Da jetzt eine Interruptquelle (I²C-Schnittstelle 4) zwei Steuerleitungen verwendet, wird je nach Modus ein Interrupt entweder von der CPU 2 oder der DMA-Einheit 3 verarbeitet und beantwortet. Bei der herkömmlichen Interrupt-Steuerung der I²C-Schnittstelle 4 durch die CPU 2 werden je zu transferierendem Byte etwa 150 Clock.Zyklen benötigt (die Angabe der Clock-Zyklen bezieht sich auf eine 68000-CPU). Bei Verwendung der erfindungsgemäßen I²C-Schnittstelle werden nur noch etwa 10 Clock-Zyklen pro zu transferierendem Byte benötigt. Durch den Transfer via die DMA-Einheit 3 wird keine Interrupt-Belastung der CPU 2 während des Transfers erzeugt, sondern nur noch die geringfügige Anzahl von Interrupts für den Start und Stop des Transfers. Wenn außerdem der DMA-Einheit 3 die 10 notwendigen Clock-Zyklen im Cycle-Steal-Modus (d.h., die CPU 2 benötigt den internen Bus 61 und 62 nicht und ermöglicht den Zugriff durch andere angeschlossene Funktionsteile) zugeteilt werden, dann führt dies zu einer optimalen Auslastung von Datenbus 61 und Adressbus 62. Durch eine solche Verzahnung des Buszugriffs von DMA-Einheit 3 und CPU 2 kann eine Datenrate von 400 kBits/s auf dem I²C-Bus 5 vom Kommunikationssystem 1 verarbeitet werden.

## Patentansprüche

1. Kommunikationssystem (1) mit wenigstens einer Schnittstelle zum Datenaustausch (4), die über wenigstens einen internen Bus (61, 62) mit einem Mikroprozessor (2) und einer DMA-Einheit (3) gekoppelt ist, und die zur Steuerung des Datenaustausches jeweils zu quittierende Steuersignale entweder an einen Mikroprozessor (2) oder eine DMA-Einheit (3) überträgt,
**dadurch gekennzeichnet,**
**dass** die Schnittstelle (4) zur Übertragung einer ersten Gruppe von Steuersignalen über eine erste Steuerleitung (10) an die DMA-Einheit (3) und einer zweiten Gruppe von Steuersignalen über eine zweite Steuerleitung (8) an den Mikroprozessor (2) vorgesehen ist, wobei die Schnittstelle (4) über die erste und die zweite Steuerleitung (10, 8) ständig mit der DMA-Einheit (3) und dem Milcroprozessor (2) verbunden ist.

2. Kommunikationssystem nach Anspruch 1,
**dadurch gekennzeichnet,**
**daß** die Schnittstelle (4) zum Datenaustausch mit einem I²C-Bus (5) vorgesehen und als eine serielle I²C-Bus-Schnittstelle ausgeführt ist.

3. Kommunikationssystem nach Anspruch 2,
**dadurch gekennzeichnet,**
**daß** die I²C-Bus-Schnittstelle (4) zur Bildung der ersten Gruppe von Steuersignalen aus den Steuersignalen, die das Senden und Empfangen von Daten durch die I²C-Bus-Schnittstelle (4) während eines Datenaustausches betreffen, vorgesehen ist.

4. Kommunikationssystem nach Anspruch 2,
**dadurch gekennzeichnet,**
**daß** die I²C-Bus-Schnittstelle (4) zur Bildung der zweiten Gruppe von Steuersignalen aus den Steuersignalen, die eine Initialisierung, eine Adressierung und eine Beendigung eines Datenaustausches betreffen, vorgesehen ist.

## Claims

1. A communication system (1) with at least one data exchange interface (4), which is coupled to a microprocessor (2) and a DMA unit (3) by at least one internal bus (61, 62) and which, for controlling the data exchange, transmits control signals either to a microprocessor (2) or a DMA unit (3) which control signals are to be acknowledged each time, **characterized in that** the interface (4) transmits a first group of control signals by a first control line (10) to a DMA unit (3) and a second group of control signals by a second control line (8) to the microprocessor (2) while the interface (4) is continuously connected to the DMA unit (3) and the microprocessor (2) over the first and the second control line (10, 8).

2. A communication system as claimed in claim 1, **characterized in that** the interface (4) has an I²C bus (5) for the data exchange and is arranged as a serial I²C bus interface.

3. A communication system as claimed in claim 2, **characterized in that** the I²C bus interface (4) forms the first group of control signals from the control signals relating to the transmission or reception of data by the I²C bus interface (4) during a data exchange.

4. A communication system as claimed in claim 2, **characterized in that** the I²C bus interface (4) forms the second group of control signals from the control signals relating to an initialization, an addressing and a termination of a data exchange.

## Revendications

1. Système de communications (1) comprenant au moins une interface pour l'échange de données (4), qui est couplée par au moins un bus interne (61, 62) avec un microprocesseur (2) et une unité DMA (3), et qui transmet, pour la commande de chaque échange de données, des signaux de commande à acquitter soit à un microprocesseur (2), soit à une unité DMA (3),
**caractérisé en ce que**
l'interface (4) est prévue pour la transmission d'un premier groupe de signaux de commande, par une première ligne de commande (10), à l'unité DMA (3), et d'un second groupe de signaux de commande, par une seconde ligne de commande (8), au microprocesseur (2), où l'interface (4) est connectée en permanence, par la première et la seconde ligne de commande (10,8), à l'unité DMA (3) et au microprocesseur (2).

2. Système de communications selon la revendication 1,
**caractérisé en ce que**
l'interface (4) est prévue pour l'échange de données avec un bus I²C (5) et est réalisée comme une interface de bus I²C sérielle.

3. Système de communications selon la revendication 2,
**caractérisé en ce que**
l'interface de bus I²C (4) est prévue pour la formation du premier groupe de signaux de commande à partir des signaux de commande qui concernent l'envoi et la réception de données par l'interface de bus I²C (4) pendant un échange de données.

4. Système de communications selon la revendication 2,
**caractérisé en ce que**
l'interface de bus I²C (4) est prévue pour la formation du second groupe de signaux de commande à partir des signaux de commande qui concernent une initialisation, un adressage et une terminaison d'un échange de données.
